# EUROPÄISCHE PATENTANMELDUNG

(11) **EP 2 660 218 A1**
(43) Veröffentlichungstag der Anmeldung: **06.11.2013**
(21) Anmeldenummer: 12166743.0
(22) Anmeldetag: 04.05.2012
(51) Int. Cl.: C04B 24/02, C04B 24/12, C04B 24/18, C04B 24/38, C04B 28/02, C04B 28/04

(54) **Verfahren zur Herstellung eines hydraulischen Bindemittels, entsprechendes Additiv sowie dessen Verwendung.**

(71) Anmelder: Construction Research & Technology GmbH, 83308 Trostberg (DE)
(72) Erfinder: Vierle, Mario, 83512 Wasserburg (DE); Ernst, Martin, 69121 Heidelberg (DE); Stefan, Madalina Andreea, 83308 Trostberg (DE)

(57) **Zusammenfassung**

Die Erfindung betrifft ein Verfahren zur Herstellung eines hydraulischen Bindemittels, umfassend in Kontakt bringen einer Zusammensetzung, enthaltend Zementklinker, vor, während oder nach dem Mahlvorgang, mit (a) einem Entschäumungsmittel und (b) 0,0005 bis 2 Gew.-%, bezogen auf die gesamte Zusammensetzung, mindestens einer lufteintragenden Verbindung, wobei das Entschäumungsmittel (a) 0,0001 bis 0,5 Gew.- %, bezogen auf die gesamte Zusammensetzung, mindestens ein Entschäumungsmittel der Formel R¹⁰- (CₘH₂ₘ-O-)ₓ-(C_{d}H_{2d}-O-)_{c}-H umfasst und das Verhältnis von (a) zu (b) zwischen 1:1 bis 1:200 beträgt.

## Beschreibung

Die Erfindung betrifft Zementadditive und im speziellen ein Verfahren zur Herstellung eines hydraulischen Bindemittels, wobei eine Zusammensetzung, enthaltend Zementklinker, vor, während oder nach dem Mahlvorgang, mit einem speziellen Entschäumungsmittel und mindestens einer lufteintragenden Verbindung in Kontakt gebracht wird. Es wird weiterhin ein entsprechendes Additiv sowie dessen Verwendung zur Verbesserung der Druckfestigkeit von damit hergestellten gehärteten Baustofferzeugnissen offenbart.

Als hydraulisch werden Stoffe angesehen, die sowohl an der Luft als auch unter Wasser erhärten und wasserbeständig sind. Insbesondere handelt es sich bei hydraulischen Bindemitteln um Zement und Puzzolane, wie etwa Flugasche, Hochofenschlacke und Trass.

Zement hat unter den hydraulischen Bindemitteln die größte wirtschaftliche Bedeutung. Mit Wasser angemacht ergibt Zement Zementleim, der durch Hydratation erstarrt und erhärtet und der auch nach dem Erhärten unter Wasser fest und raumbeständig bleibt. Zement besteht im Wesentlichen aus Portlandzementklinker und kann weiterhin beispielsweise Hüttensand, Puzzolan, Flugasche, Kalkstein, Füller und Zementzusatzmittel enthalten. Die Zementbestandteile müssen hinsichtlich ihrer Zusammensetzung statistisch betrachtet homogen sein, was insbesondere durch adäquate Mahl- und Homogenisierungsverfahren erreicht werden kann.

Ein zentraler Schritt in der Zementherstellung ist somit das Mahlen des Zementklinkers. Da Zementklinker sehr hart sind, ist das Zerkleinern sehr energieaufwändig. Für die Eigenschaften des Zementes ist es wichtig, dass er als feines Pulver vorliegt. Deshalb ist die Feinheit des Zementes ein wichtiges Qualitätsmerkmal. Um das Zerkleinern in Pulverform zu erleichtern werden sogenannte Mahlhilfsmittel eingesetzt. Dadurch werden die Mahlzeiten und Energiekosten stark reduziert. Mahlhilfsmittel haben insbesondere auch die Aufgabe beispielsweise bei der Zementklinker- oder Kalksteinmahlung eine höhere Mahlfeinheit des Mahlgutes zu ermöglichen.

Mahlhilfsmittel wirken durch Ummantelung der zu Agglomeration neigenden Partikel mit dünnen, insbesondere monomolekularen Schichten und führen damit zu einer Neutralisation der Oberflächenladungen. Physikalisch gesehen liefern die Mahlhilfsmittel rasch Ladungsträger, die zum Absättigen der während des Bruchs der Klinkerpartikel auf den Bruchflächen entstehenden Ladungen zur Verfügung stehen und dadurch die Agglomerationsneigung reduzieren. Außerdem werden Mahlhilfsmittel auf den Bruchflächen der noch nicht separierten Körner absorbiert und verhindern deren Rückvereinigung unter Einwirkung von Temperatur und Druck.

Die Wirksamkeit bekannter Mahlhilfsmittel ist sehr unterschiedlich. Die Zugabemenge von Mahlhilfsmitteln, bezogen auf das Mahlgut, liegt typischerweise zwischen 0,05 und 0,2 Gew.-%. Zu den bekannten Mahlhilfsmitteln zählen beispielsweise Glykole, insbesondere Mono-, Di-, Tri- und Polyglykole, Polyalkohole wie etwa Glycerin, Alkanolamine, insbesondere Triethanolamin und Triisopropanolamin, organische Säuren, insbesondere Essigsäure oder deren Salze, Aminosäuren, Molasse sowie organische und anorganische Salze, insbesondere auf Basis von Acetat, Formiat, Gluconat, Chlorid, Fluorid, Nitrat und Sulfat.

Trotz zahlreicher Entwicklungen in der Mahltechnologie wird der größte Teil des Zements immer noch in Rohr-Kugelmühlen gemahlen, bei denen dem Effekt von Mahlhilfsmitteln eine besondere Bedeutung zukommt. In der Regel wird das Zement-Rohmaterial trocken vermahlen. Bei der trockenen Aufbereitung werden die Rohmaterialkomponenten über Dosiereinrichtungen einer Mühle in einem bestimmten Mischungsverhältnis aufgegeben und zu Rohmehl feingemahlen. Während des Mahlvorgangs kommt es zu einer Erwärmung des Mahlgutes, wobei die Temperatur des aus dem Mahlaggregat entnommenen Mahlgutes 80 bis 120°C betragen kann.

In der Praxis erfolgt die Auswahl eines geeigneten Mahlhilfsmittels dahingehend, daß eine Optimierung insbesondere folgender Kenngrößen angestrebt wird: Verhinderung von Anbackungen im Mahlaggregat, Erzielung einer möglichst hohen Mahlfeinheit beziehungsweise großen spezifischen Oberfläche des Mahlgutes, Verbesserung der Fließfähigkeit des Mahlgutes, Homogenisierung des Mahlgutes, Auflösung von Agglomeraten des Mahlgutes und Reduzierung der Mahlhilfsmittel-Kosten. Insbesondere in der Endvermahlung von hydraulischen Bindemitteln können Mahlhilfsmittel neben ihrer Wirkung während des Mahlvorgangs auch einen positiven Effekt auf die spätere Härtung und die mechanischen Eigenschaften des Zements haben, was von besonderem Vorteil ist.

Mahlhilfsmittel können somit auch zugefügt werden, um die physikalischen Eigenschaften des fertigen Zements zu ändern. US-A-4 990 190, US-A-5 017 234 und US-A-5 084 103 beschreiben, dass bestimmte höhere Trihydroxyalkylamine, wie Triisopropanolamin und N,N-Bis(2-hydroxyethyl)-2-hydroxypropylamin die Spätfestigkeit nach 28 Tagen nach der Herstellung des Nasszementgemisches von Portlandzement verbessern. Die in diesen Patenten beschriebenen, festigkeitserhöhenden höheren Trihydroxyalkylaminadditive werden als besonders brauchbar in gemischten Zementen beschrieben.

Die WO 2010/085425 offenbart die Verwendung von Polycarboxylatethern als Mahlhilfsmittel, welche ein "Rückgrat" auf Basis von Kohlenstoff und Polyetherseitenketten aufweisen. Diese Verbindungen sind gegenüber denen bei der Vermahlung von hydraulischen Bindemitteln auftretenden Bedingungen, wie hohen Temperaturen und Scherkräften, stabil und führen zu einer besseren Verarbeitbarkeit der hergestellten Zusammensetzung.

Es ist allerdings auch bekannt, dass viele Mahlhilfsmittel, wie etwa Triisopropanolamin und Polycarboxylatether, dazu neigen, die beim Anmachen in den Zement eingetragene Luftmenge zu erhöhen. Die Herstellung von Beton und Mörtel erfordert das Mischen von hydraulischem Zement, Sand, Füllstoffen und ggf. weiteren Additiven mit Wasser, wobei eine weitgehend homogene Mischung erhalten wird. In Folge des Vermischens der Komponenten wird in diesem System Luft eingeschlossen, welche in der Regel in Form von fein verteilten Bläschen vorliegt. Ein geringer Lufteintrag ist tolerierbar und hat sogar vorteilhafte Wirkungen auf die Frost-Tau-Beständigkeit, wenn sich die Luftmenge und die Größe der Luftbläschen in bestimmten Grenzen bewegt. Im Allgemeinen ist das Einführen von Luft in diese Zusammensetzungen allerdings nachteilig, da hierdurch die Druckfestigkeit der daraus hergestellten gehärteten Produkte deutlich verringert wird. Als Faustregel wird angenommen, dass durch jedes Volumenprozent eingeführte Luftblasen die Druckfestigkeit um etwa 5 % verringert wird.

Es wird bereits eine Reihe von Additiven in der Zementindustrie eingesetzt, um die Menge an Luft in gehärteten hydraulischen Zement zu verringern. Diese in der Regel als Entschäumer bezeichneten Additive haben einen kleinen HLB-Wert (hydrophiliclipophilic-balance), wie etwa tri-n-Butylphosphat und n-Octanol. Allerdings sind die Eigenschaften dieser Verbindungen nicht in jeder Hinsicht befriedigend. Zunächst können diese Entschäumungsmittel nur schwer in den trockenen Zement eingearbeitet werden, da sie aufgrund der geringen eingesetzten Menge nicht homogen verteilt werden können. Weiterhin sind diese Entschäumungsmittel nicht mit den gewöhnlich eingesetzten Additiven mischbar und können somit auch nicht mit den ausnahmslos wassermischbaren konventionellen Additiven als Mischung eingesetzt werden. Die Zugabe eines solchen Entschäumers zu anderen in Wasser gelösten Additiven führt nach kürzester Zeit zur Separation des Entschäumers, welcher somit der zu behandelnden Zusammensetzung nicht in brauchbarer Weise zugeführt werden kann.

Entschäumer sind generell sehr effektiv und müssen deshalb in sehr geringen Mengen eingesetzt und in den Zusammensetzungen, enthaltend ein hydraulisches Bindemittel, homogen verteilt werden. Die derzeit bekannten Entschäumer können hinsichtlich ihrer Dosierung und ihrer Verteilung in der zu behandelnden Zusammensetzung nur schwer kontrolliert werden. Dies führt zu unerwünschten Wirkungen, wobei sowohl die eingebrachte Luftmenge, aufgrund von Unter- oder Überdosierung, als auch die Verteilung der eingebrachten Luftbläschen, aufgrund von inhomogener Verteilung des Entschäumers, häufig ein Problem darstellt.

Die WO 2011/022217 beschäftigt sich mit Mischungen aus Zementadditiven, welche Luft in das zementäre System einführen sowie Entschäumern auf Basis von ethoxylierten, propoxylierten Fettalkoholen sowie Alkylphenolen. Diese Entschäumer haben den Vorteil, dass sie gegenüber denen bei der Vermahlung von hydraulischen Bindemitteln auftretenden Bedingungen, wie hohen Temperaturen und Scherkräften, stabil sind. Weiterhin weisen diese Entschäumungsmittel aber den Nachteil auf, dass ihre Entschäumungswirkung nur gering ist und das die beschrieben Verbindungen teilweise sogar zu einem erhöhten Eintrag von Luft führen.

Aufgabe der vorliegenden Erfindung war es deshalb, verbesserte Entschäumungsmittel in Verbindung mit lufteinführenden Additiven für hydraulische Bindemittel enthaltende Zusammensetzungen zur Verfügung zu stellen. Neben sehr guten Eigenschaften als Mahlhilfsmittel sollten diese Mischungen beim Anmachen mit Wasser zu einem möglichst geringen Lufteintrag in die ein hydraulisches Bindemittel enthaltende Zusammensetzungen führen, wobei gleichzeitig verbesserte Verarbeitungseigenschaften erzielt werden sollten.

Gelöst wurde diese Aufgabe durch ein Verfahren zur Herstellung eines hydraulischen Bindemittels, umfassend in Kontakt bringen einer Zusammensetzung, enthaltend Zementklinker, vor, während oder nach dem Mahlvorgang, mit
(a) einem Entschäumungsmittel und
(b) 0,0005 bis 2 Gew.-%, bezogen auf die gesamte Zusammensetzung, mindestens einer lufteintragenden Verbindung,
   wobei das Entschäumungsmittel (a) 0,0001 bis 0,5 Gew.-%, bezogen auf die gesamte Zusammensetzung, mindestens ein Entschäumungsmittel der Formel

   R¹⁰- (CₘH₂ₘ-O-)ₓ-(C_{d}H_{2d}-O-)_{c}-H (I)

   wobei
   - R¹⁰: für einen verzweigten oder unverzweigten C₄- bis C₂₀-Alkylrest,
   - m: für jede (CₘH₂ₘ-O-)-Einheit unabhängig voneinander gleich oder verschieden für 2 oder 3,
   - d: für jede (C_{d}H_{2d}-O-)-Einheit unabhängig voneinander gleich oder verschieden für eine ganze Zahl zwischen 4 und 20,
   - x: für eine ganze Zahl zwischen 2 und 20 und
   - c: für eine ganze Zahl zwischen 1 und 5 steht, umfasst
   und das Verhältnis von (a) zu (b) zwischen 1:1 bis 1:200 beträgt.

Überraschend wurde gefunden, dass das erfindungsgemäße Additiv nicht nur hinsichtlich der Vermahlung sehr effektiv ist. Die gestellte Aufgabe wurde in vollem Umfang gelöst, wobei beim Anmachen mit Wasser nur ein geringer Eintrag von Luft in die erfindungsgemäß erhaltene Zusammensetzung erfolgt. Weiterhin weist das mit dem erfindungsgemäßen Additiv behandelte Produkt nach dem Anmachen mit Wasser sowohl eine sehr gute Frühfestigkeit nach einem Tag als auch eine hervorragende Druckfestigkeit nach 28 Tagen auf.

In einem bevorzugten erfindungsgemäßen Entschäumungsmittel der Formel (I) stehen die Reste für folgende Bedeutung:
- R¹⁰: für einen verzweigten oder unverzweigten C₄- bis C₁₆-Alkylrest,
- d: für jede (C_{d}H_{2d}-O-)-Einheit unabhängig voneinander gleich oder verschieden für eine ganze Zahl zwischen 4 und 14,
- x: für eine ganze Zahl zwischen 4 und 14 und
- c: für eine ganze Zahl zwischen 1 und 4.

Besonders bevorzugt steht R¹⁰ für einen verzweigten oder unverzweigten C₇- bis C₁₅-Alkylrest, m für 2, x für eine ganze Zahl zwischen 7 und 11, d für jede (C_{d}H_{2d}-O-)-Einheit unabhängig voneinander gleich oder verschieden für eine ganze Zahl zwischen 4 und 14 und c für eine ganze Zahl zwischen 1 und 3.

In einer besonders bevorzugten Ausführungsform steht R¹⁰ für C₁₀, m für 2, x für 10, d für 5 und c für 1,5. In weiterhin besonders bevorzugten Ausführungsformen steht R¹⁰ für C₉, m für 2, x für 7, d für 4 und c für 1,5 sowie R¹⁰ für C₉, m für 2, x für 10, d für 5 und c für 1,5.

In einer bevorzugten Ausführungsform besteht das Entschäumungsmittel (a) aus mindestens einem Entschäumungsmittel der Formel (I).

Bevorzugt kann es sich bei der lufteintragenden Verbindung um mindestens eine aus der Reihe Polycarboxylatether, Ligninsulfonat, Melaminformaldhydsulfonat, Naphtalinformaldehydsulfonat, Mono-, Di-, Tri- und Polyglykole, Polyalkohole, insbesondere Glycerin, Alkanolamin, Aminosäuren, Zucker, Molasse, organische und anorganische Salze handeln.

Bei dem lufteintragenden Additiv (b) im Sinne der vorliegenden Erfindung handelt es sich bevorzugt um Polycarboxylatether.

Insbesondere handelt es sich bei dem Polycarboxylatether um ein Copolymer, welches erhältlich ist durch Polymerisation einer Mischung von Monomeren, umfassend
(II) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst
   und
(III) mindestens ein ethylenisch ungesättigtes Monomer mit einem Polyalkylenoxid-Rest.

Die Copolymere entsprechend der vorliegenden Erfindung enthalten mindestens zwei Monomerbausteine. Es kann aber auch vorteilhaft sein, Copolymere mit drei oder mehr Monomerbausteinen zu verwenden.

In einer bevorzugten Ausführungsform wird das ethylenisch ungesättigte Monomer (II) durch mindestens eine der folgenden allgemeinen Formeln aus der Gruppe (IIa), (IIb) und (IIc) repräsentiert:

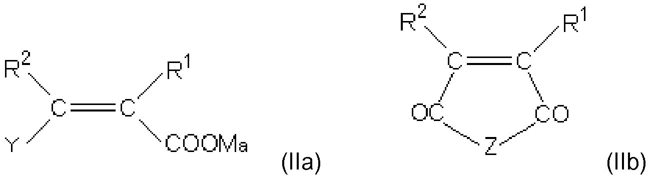

Bei dem Mono- oder Dicarbonsäure-Derivat (IIa) und dem in cyclischer Form vorliegenden Monomer (IIb), wobei Z = O (Säureanhydrid) oder NR² (Säureimid) darstellen, steht R¹ und R² unabhängig voneinander für Wasserstoff oder einen aliphatischen Kohlenwasserstoffrest mit 1 bis 20 C-Atomen, vorzugsweise eine Methylgruppe. Y bedeutet H, -COOMₐ, -CO-O(C_{q}H_{2q}O)ᵣ-R³, -CO-NH-(C_{q}H_{2q}O)ᵣ-R³.

M bedeutet Wasserstoff, ein ein- oder zweiwertiges Metallkation, vorzugsweise Natrium-, Kalium-, Calcium- oder Magnesium-Ion, weiterhin Ammonium oder ein organischer Aminrest sowie a = ½ oder 1, je nachdem, ob es sich bei M um ein ein- oder zweiwertiges Kation handelt. Als organische Aminreste werden vorzugsweise substituierte Ammonium-Gruppen eingesetzt, die sich ableiten von primären, sekundären oder tertiären C₁₋₂₀-Alkylaminen, C₁₋₂₀-Alkanolaminen, C₅₋₈-Cycloalkylaminen und C₆₋₁₄-Arylaminen. Beispiele für die entsprechenden Amine sind Methylamin, Dimethylamin, Trimethylamin, Ethanolamin, Diethanolamin, Triethanolamin, Methyldiethanolamin, Cyclohexylamin, Dicyclohexylamin, Phenylamin, Diphenylamin in der protonierten (Ammonium)Form.

R³ bedeutet Wasserstoff, ein aliphatischer Kohlenwasserstoffrest mit 1 bis 20 C-Atomen, ein cycloaliphatischer Kohlenwasserstoffrest mit 5 bis 8 C-Atomen, ein Arylrest mit 6 bis 14 C-Atomen, der ggf. noch substituiert sein kann, q = 2 , 3 oder 4 sowie r = 0 bis 200, vorzugsweise 1 bis 150. Die aliphatischen Kohlenwasserstoffe können hierbei linear oder verzweigt sowie gesättigt oder ungesättigt sein. Als bevorzugte Cycloalkylreste sind Cyclopentyl- oder Cyclohexylreste, als bevorzugte Arylreste Phenyloder Naphthylreste anzusehen, die insbesondere noch durch Hydroxyl-, Carboxyl- oder Sulfonsäuregruppen substituiert sein können.

Die folgende Formel stellt das Monomer (IIc) dar:

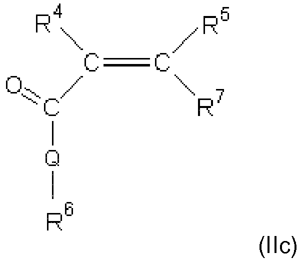

Hierbei steht R⁴ und R⁵ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen. Q kann gleich oder verschieden sein und wird durch NH, NR³ oder O repräsentiert, wobei R³ die oben genannte Bedeutung besitzt.

Weiterhin ist R⁶ gleich oder verschieden und wird durch (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und (CₙH₂ₙ)-NR⁸_{b} mit n = 0, 1, 2, 3 oder 4 und b = 2 oder 3 repräsentiert.

R⁷ bedeutet H, -COOMₐ, -CO-O(C_{q}H_{2q}O)ᵣ-R³, -CO-NH-(C_{q}H_{2q}O)ᵣ-R³, wobei Mₐ, R³, q und r die oben genannte Bedeutungen besitzen.

R⁸ steht für Wasserstoff, einen aliphatischen Kohlenwasserstoffrest mit 1 bis 10 C-Atomen, einen cycloaliphatischen Kohlenwasserstoffrest mit 5 bis 8 C-Atomen, ein ggf. substituierter Arylrest mit 6 bis 14 C-Atomen.

Weiterhin bevorzugt im Sinne der vorliegenden Erfindung wird das ethylenisch ungesättigte Monomer (III) durch folgende allgemeine Formeln repräsentiert: 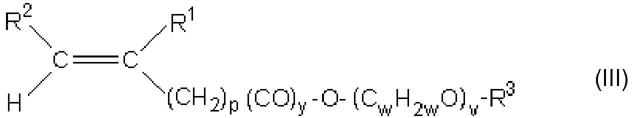 wobei p für eine ganze Zahl zwischen 0 und 6 steht, y für 0 oder 1, v für eine ganze Zahl zwischen 3 und 500 und w unabhängig voneinander für jede (C_{w}H_{2w}O)-Einheit gleich oder verschieden für eine ganze Zahl zwischen 2 und 18.
R¹, R² und R³ besitzen die oben genannte Bedeutung.

In einer bevorzugten Ausführungsform stehen in der allgemeine Formeln (III) p für eine ganze Zahl zwischen 0 und 4, v für eine ganze Zahl zwischen 5 und 500 und w unabhängig voneinander für jede (C_{w}H_{2w}O)-Einheit gleich oder verschieden für 2 oder 3.

Der molare Anteil der Monomere (II) und (III) in dem erfindungsgemäßen Polycarboxylatether kann in weiten Bereichen frei gewählt werden. Als besonders vorteilhaft hat es sich erwiesen, wenn der Anteil des Monomeren (II) an dem Copolymer 5 bis 95 Mol-%, bevorzugt 30 bis 95 Mol-% und insbesondere 55 bis 95 Mol-% beträgt. In einer weiterhin bevorzugten Ausführungsform beträgt der Anteil des Monomeren (III) an dem Copolymer 1 bis 89 Mol-%, insbesondere 1 bis 55 Mol-% und besonders bevorzugt 1 bis 30 Mol-%.

Es ist hierbei als bevorzugt anzusehen, dass das Monomer (III) ein Molekulargewicht von 500 bis 10000 g/mol aufweist.

In einer bevorzugten Ausführungsform besitzt das erfindungsgemäße Copolymer ein Molekulargewicht von 12000 bis 75000 g/mol.

Bei dem lufteintragenden Additiv (b) im Sinne der vorliegenden Erfindung kann es sich weiterhin um Alkanolamin, insbesondere mindestens ein mono-, di- oder tertiäres Alkanolamin aus der Reihe Triethanolamin, Triisopropanolamin, Diethanolisopropanolamin, Ethanoldiisopropanolamin, Poly(hydroxyalkyliertes)polyethylenamin, N,N-Bis(2-hydroxypropyl)-N-(hydroxyethyl)amine, 1-(N,N-Bis(2-hydroxyethyl)amino)propan-2-ol, N,N,N',N'-Tetra-(2-hydroxyethyl)-ethylendiamin, Methyldiethanolamin, Monoethanolamin, Diethanolamin, Monoisoporopanolamin und Diisopropanolamin handeln. Insbesondere bevorzugt handelt es sich bei dem Alkanolamin um Triisopropanolamin.

In einer bevorzugten Ausführungsform umfasst die Zusammensetzung enthaltend Zementklinker bei der Vermahlung gegebenenfalls auch noch weitere Komponenten aus der Reihe Flugasche, Hochofenschlacke, Metakaolin, Silicastaub, Kalksteinmehl, Puzzolane und Asche, insbesondere Asche aus Reisschalen und Kornspelzen. Das erfindungsgemäße Verfahren kann auch für die Herstellung von Mischzementen verwendet werden. Hierzu können individuelle Zemente, die jeweils separat durch Mahlung hergestellt werden, gemischt werden, wobei mindestens einer der individuellen Zemente nach dem erfindungsgemäßen Verfahren vermahlen wird oder es wird eine Mischung von mehreren Zementklinkern mit den erfindungsgemäßen Additiven gemahlen, um einen Mischzement zu erhalten. Ebenfalls können individuelle Zemente durch gleichzeitige oder separate Vermahlung von Klinker und Kompositmaterialien hergestellt werden. Es ist jedoch als bevorzugt anzusehen, dass die Zusammensetzung enthaltend Zementklinker zu mehr als 60 Gew.-% aus Portlandzementklinker besteht.

Der Mahlprozess erfolgt üblicherweise in einer Kugelmühle. Es können aber grundsätzlich auch andere Mühlen, wie sie in der Zementindustrie bekannt sind, eingesetzt werden. In einer bevorzugten Ausführungsform wird die Mahlung in mindestens einer Mühle aus der Reihe Kugelmühle, Gutbettwalzenmühle und Horizontalmühle durchgeführt.

Weiterhin kann in dem erfindungsgemäßen Verfahren auch mindestens ein weiteres bekanntes Mahlhilfsmittel eingesetzt werden. In einer bevorzugten Ausführungsform wird der Zusammensetzung enthaltend Zementklinker, vor oder während des Mahlvorgangs, Wasser zugegeben.

In einer weiterhin bevorzugten Ausführungsform wird die Zusammensetzung, enthaltend Zementklinker, während des Mahlvorgangs durch eine Heizquelle erwärmt.

Es ist weiterhin als bevorzugt anzusehen, dass die Zusammensetzung einen Emulgator enthält. Insbesondere kann es sich um mindestens ein Oxo- oder Fettalkoholethoxylat, der Formel R¹¹ - (C₂H₄-O-)ₓ-H handeln,
wobei
R¹¹ für einen verzweigten oder unverzweigten C₈- bis C₂₀-Alkylrest und
x für eine ganze Zahl zwischen 2 und 20 steht.
Bevorzugt steht R¹¹ für C₉ bis C₁₃ und x für eine ganze Zahl zwischen 2 und 14, besonders bevorzugt steht R¹¹ für C₁₃ und x für eine ganze Zahl zwischen 4 und 12. In einer besonders bevorzugten Ausführungsform steht R¹¹ für C₁₃ und x für 6 oder x für 10. Weiterhin bevorzugt steht R¹¹ für C₁₀ bis C₁₈ und x für 7.

Die Emulgatoren können die Stabilität des Entschäumers in dem hydraulischen Bindemittel erhöhen. Insbesondere umfasst die erfindungsgemäße Zusammensetzung zwischen 0,0000001 bis 0,5 Gew.-%, insbesondere zwischen 0,0000005 bis 0,5 Gew.-% mindestens eines Emulgators.

Ein weiterer Aspekt der vorliegenden Erfindung ist ein hydraulisches Bindemittel, welches nach dem erfindungsgemäßen Verfahren hergestellt wird. Weiterhin wird durch die vorliegende Erfindung ein gehärtetes Baustofferzeugnis umfasst, welches aus einem erfindungsgemäßen hydraulischen Bindemittel hergestellt wurde.

Ein weiterer Gegenstand der vorliegenden Erfindung ist ein Additiv umfassend
(a) 0,1 bis 1 Gewichtsteile mindestens eines
   Entschäumungsmittels der Formel

   R¹⁰- (CₘH₂ₘ-O-)ₓ-(C_{d}H_{2d}-O-)_{c}-H (I)

   wobei
   - R¹⁰: für einen verzweigten oder unverzweigten C₄- bis C₂₀-Alkylrest,
   - m: für jede (CₘH₂ₘ-O-)-Einheit unabhängig voneinander gleich oder verschieden für 2 oder 3,
   - d: für jede (C_{d}H_{2d}-O-)-Einheit unabhängig voneinander gleich oder verschieden für eine ganze Zahl zwischen 4 und 20,
   - x: für eine ganze Zahl zwischen 2 und 20 und
   - c: für eine ganze Zahl zwischen 1 und 5 steht
(b) 1 bis 20 Gewichtsteile mindestens einer Verbindung aus der Reihe Polycarboxylatether, Ligninsulfonat, Melaminformaldhydsulfonat, Naphtalinformaldehydsulfonat, Mono-, Di-, Tri- und Polyglykole, Polyalkohole, insbesondere Glycerin, Aminoalkohole, Aminosäuren, Zucker, Molasse, organische und anorganische Salze und
(c) 0 bis 40 Gewichtsteile Wasser.

Das erfindungsgemäße Additiv wird bevorzugt als wässrige Suspension auf die ein hydraulisches Bindemittel enthaltende Zusammensetzung aufgebracht. In einer bevorzugten Ausführungsform umfasst das Additiv zwischen 10 und 30 Gewichtsteile Wasser.

In einer besonders bevorzugten Ausführungsform besteht das Additive aus (a), (b) und ggf. (c).

Ein weiterer Gegenstand der vorliegenden Erfindung ist die Verwendung eines erfindungsgemäßen Additives, umfassend (a), (b) und ggf. (c), in einer Zusammensetzung enthaltend Zementklinker, wobei das Additiv vor, während oder nach dem Mahlvorgang zur Herstellung eines hydraulischen Bindemittels zugegeben wird, zur Verbesserung der Druckfestigkeit des daraus hergestellten, gehärteten Baustofferzeugnisses.

Insbesondere wird durch die vorliegende Erfindung ein Verfahren zur Herstellung von hydraulischen Bindemitteln zur Verfügung gestellt, in welchem die eingesetzten Additive neben einer hervorragenden Wirkung während des Mahlvorgangs auch einen positiven Effekt auf die spätere Härtung und die mechanischen Eigenschaften des vermahlenen Produktes haben. Beim Anmachen mit Wasser erfolgt bei der nach dem erfindungsgemäßen Verfahren erhaltenen Zusammensetzung nur ein geringer Lufteintrag. Insbesondere wurden hierdurch sehr gute Festigkeitseigenschaften der erfindungsgemäßen Zusammensetzung in allen Alterungsstufen nach dem Anmachen mit Wasser erreicht, wobei eine sehr gute Frühfestigkeit nach einem Tag sowie eine hohe Druckfestigkeit nach 28 Tagen erzielt werden konnte.

Die nachfolgenden Beispiele verdeutlichen die Vorteile der vorliegenden Erfindung.

### Beispiele

Die Mahlversuche wurden in einer Planetenkugelmühle (Retsch GmbH) durchgeführt. Pro Planet wurden 150,0 g Portlandzementklinker; 7,5 g Gips (CaSO₄ · 2 H₂O); 0,088 g Triisopropanolamin (TiPA) 85% (technical grade, 85%-ige Lösung in Wasser) und die jeweils unten angegebene Menge des Entschäumers eingewogen.

Anschließend wurde 2 Minuten bei 200 min⁻¹ (Drehzahl der Hauptscheibe) und 2 Minuten bei 400 min⁻¹ gemahlen. Die Mahlung wurde bei Raumtemperatur ohne zusätzliche Wärmezufuhr gestartet, durch die Reibung während der Mahlung stieg die Temperatur jedoch bis auf ca. 60 - 70°C zum Mahlende an. Der so erhalte Zement wurde zur Abtrennung der Mahlkugeln durch ein 1 mm Sieb gesiebt.

Pro Versuch wurden je 10 Mahlungen durchgeführt, die jeweils erhaltenen Zemente vereint und die Probe homogenisiert.

Die so erhaltenen Zemente wurden anschließend im Mörtel nach DIN EN 196-1 getestet. Hierzu wurden die Zemente mit Normensand (Sand zu Zement Verhältnis 3:1) bei konstantem Wasser/Zementverhältnis (W/Z) = 0,5 gemischt und folgende Werte bestimmt: Luftporengehalt nach DIN 18555-2 nach dem Anmischen (Initial), Mörtelausbreitmaß nach dem Anmischen und nach 30 Minuten, Mörtelrohdichte nach dem Anmischen und nach 30 Minuten, Druckfestigkeit an Normenprüfkörpern nach 1, 7 und 28 Tagen (Herstellung, Lagerung und Prüfung der Druckfestigkeit nach DIN EN 196-1).

### Ergebnisse Teil 1: Vergleichsversuche bei identischer Dosierungsmenge

Für die Versuche wurden folgende Entschäumerstrukturen der Formel (I) verwendet:

| Bezeichnung | Chemische Struktur | | |
|---|---|---|---|
| | Startalkohol (R¹⁰) | (CₘH₂ₘ-O-)ₓ | (C_{d}H_{2d}-O-)_{c} |
| Blank | - | - | - |
| Blank + TiPA | - | - | - |
| Vergleichsbeispiel 1 | C₁₃ - C₁₅ Alkohol | m=2;x=12 | c=5;d=3 |
| Vergleichsbeispiel 2 | C₁₃ - C₁₅ Alkohol | m = 2; x = 16 | c = 4; d = 3 |
| Entschäumer 1 | 2-Propylheptanol | m=2;x=10 | c = 1,5; d = 5 |
| Entschäumer 2 | Isodekanol | m=2;x=7 | c = 1,5; d = 4 |

Als Vergleichsbeispiel 1 und 2 wurden Entschäumerstrukturen verwendet, wie sie in Patentanmeldung WO2011/022217 beschrieben sind. Pro Mahlung wurden 0,075 g Entschäumer dosiert (0,05 Gew.-% bezogen auf die Zementeinwaage). Für die Versuche "Blank" wurde nur der Klinker ohne Verwendung von TiPA und Entschäumer gemahlen, bei der Serie "Blank + TiPA" wurde der Zement mit TiPA aber ohne Entschäumerzugabe gemahlen.

Bei Durchführung des Normenmörteltests nach DIN EN 196-1 konnten folgenden Ergebnisse erhalten werden:
Eigenschaften des Frischmörtels :

| | Klopfmaß (cm) | | Luftporen-gehalt (%) | Mörtelrohdichte (kg·dm⁻³) | |
|---|---|---|---|---|---|
| | Initial | 30 min | | Initial | 30 min |
| Blank | 18,4 | 17,2 | 3,8% | 2,215 | 2,213 |
| Blank + TiPA | 19,5 | 17,5 | 7,1% | 2,142 | 2,165 |
| Vergleichsbeispiel 1 | 22,3 | 20,4 | 21,5% | 1,792 | 1,819 |
| Vergleichsbeispiel 2 | 22,4 | 20,7 | 19,5% | 1,799 | 1,852 |
| Erfindungsgemäßes Beispiel 1 | 19,1 | 17,2 | 4,9% | 2,202 | 2,204 |
| Erfindungsgemäßes Beispiel 2 | 19.3 | 17,7 | 5,1% | 2,194 | 2,199 |

Festigkeitsentwicklung:

| Entschäumer | Druckfestigkeit (MPa) | | | Druckfestigkeit (% gegenüber Blank) | | |
|---|---|---|---|---|---|---|
| | 1 Tag | 7 Tage | 28 Tage | 1 Tag | 7 Tage | 28 Tage |
| Blank | 9,1 | 40,0 | 58,8 | - | - | - |
| Blank + TiPA | 9,2 | 43,3 | 58,3 | + 1,1 | + 8,3 | - 0,8 |
| Vergleichsbeispiel 1 | 4,0 | 16,7 | 19,4 | - 56,0 | - 58,3 | - 67,0 |
| Vergleichsbeispiel 2 | 4,2 | 16,7 | 21,6 | - 53,8 | - 58,3 | - 63,3 |
| Erfindungsgemäßes Beispiel 1 | 9,7 | 45,3 | 61,9 | + 6,5 | + 13,3 | + 5,3 |
| Erfindungsgemäßes Beispiel 2 | 10,5 | 47,3 | 61,5 | +15,4 | + 18,3 | + 4,6 |

Bei der Mahlung unter Zugabe von TiPA steigt erwartungsgemäß der Luftporengehalt bei der anschließenden Austestung des Zementes in Normenmörtel gegenüber dem Test mit Zement ohne TiPA deutlich an, was sich auch in einer leichten Reduktion der 28 Tage Festigkeiten auswirkt. Die Druckfestigkeiten nach 1 und 7 Tage sind leicht bzw. deutlich erhöht.

Unter Verwendung der in WO2011/022217 beschriebenen Entschäumer (Vergleichsbeispiel 1 und 2) zeigt sich im Normmörtel ein sehr starker Luftporeneintrag und weitaus geringere Mörtelrohdichten. Die deutlich reduzierten Druckfestigkeiten bei allen Messzeiten zeugen davon, dass auch zu späteren Zeiten keine Entlüftung stattfindet und die Luftporen im Mörtel verbleiben.

Unter Verwendung der erfindungsgemäßen Entschäumer 1 und 2 (Erfindungsgemäßes Beispiel 1 und 2) kann hingegen der Luftporengehalt gegenüber dem bei Verwendung von TiPA deutlich reduziert werden. Die Normmörtelergebnisse der Zemente zeigen deutlich verbesserte Druckfestigkeiten bei allen Messzeiten.

### Ergebnisse Teil 2: Dosiermengenvariation

Für diese Versuchsserie wurde der Entschäumer 2 verwendet. Die Versuchsdurchführung erfolgte analog zu den vorher beschriebenen, jedoch wurden unterschiedliche Mengen an Entschäumer zugegeben, um die Aktivität auch bei geringeren Dosierungen zu testen.

Bei Durchführung des Normenmörteltests (siehe Versuchsbeschreibung) konnte folgendes Ergebnis erhalten werden:
Eigenschaften des Frischmörtels :

| Entschäumer | Entschäumer (g) | Klopfmaß (cm) | | Luftporengehalt (%) | Mörtelrohdichte (kg·dm⁻³) | |
|---|---|---|---|---|---|---|
| | | Initial | 30 min | | Initial | 30 min |
| Blank | - | 18,4 | 17,2 | 3,8% | 2,215 | 2,213 |
| Blank + TiPA | - | 19,5 | 17,5 | 7,1% | 2,142 | 2,165 |
| Erfindungsgemäßes Beispiel 4 | 7,5·10⁻⁴ | 18,8 | 17,6 | 5,8% | 2,168 | 2,182 |
| Erfindungsgemäßes Beispiel 5 | 7,5·10⁻³ | 18,9 | 17,3 | 5,4% | 2,185 | 2,175 |
| Erfindungsgemäßes Beispiel 6 | 7,5·10⁻² | 19,3 | 17,7 | 5,1% | 2,194 | 2,199 |

Festigkeitsentwicklung:

| Entschäumer | Druckfestigkeit (MPa) | | | Druckfestigkeit (% gegenüber Blank) | | |
|---|---|---|---|---|---|---|
| | 1 Tag | 7 Tage | 28 Tage | 1 Tag | 7 Tage | 28 Tage |
| Blank | 9,1 | 40,0 | 58,8 | - | - | - |
| Blank + TiPA | 9,2 | 43,3 | 58,3 | + 1,1 | + 8,3 | - 0,8 |
| Erfindungsgemäßes Beispiel 4 | 10,3 | 42,8 | 57,6 | + 13,1 | + 7,0 | - 2,0 |
| Erfindungsgemäßes Beispiel 5 | 10,0 | 44,0 | 57,4 | + 9,9 | + 10,0 | -2,4 |
| Erfindungsgemäßes Beispiel 6 | 10,5 | 47,3 | 61,5 | + 15,4 | + 18,3 | + 4,6 |

Bereits bei geringen Dosierungen von 7,510⁻⁴ g (0,0005 Gew.-% bezogen auf das Zementgewicht) kann eine Reduktion des Luftporengehalts erzielt werden sowie eine Steigerung der 1 Tag- und 7 Tage-Druckfestigkeiten, während die 28 Tage-Druckfestigkeiten nahezu unverändert bleiben. Dies zeigt deutlich die Effektivität des erfindungsgemäßen Entschäumers.

## Patentansprüche

1. Verfahren zur Herstellung eines hydraulischen Bindemittels, umfassend in Kontakt bringen einer Zusammensetzung, enthaltend Zementklinker, vor, während oder nach dem Mahlvorgang, mit
(a) einem Entschäumungsmittel und
(b) 0,0005 bis 2 Gew.-%, bezogen auf die gesamte Zusammensetzung, mindestens einer lufteintragenden Verbindung,
**dadurch gekennzeichnet, dass** das Entschäumungsmittel (a) 0,0001 bis 0,5 Gew.-%, bezogen auf die gesamte Zusammensetzung, mindestens ein Entschäumungsmittel der Formel
R¹⁰- (CₘH2ₘ-O-)ₓ-(C_{d}H_{2d}-O-)_{c}-H (I)
wobei
R¹⁰ für einen verzweigten oder unverzweigten C₄- bis C₂₀-Alkylrest,
m für jede (CₘH₂ₘ-O-)-Einheit unabhängig voneinander gleich oder verschieden für 2 oder 3,
d für jede (C_{d}H_{2d}-O-)-Einheit unabhängig voneinander gleich oder verschieden für eine ganze Zahl zwischen 4 und 20,
x für eine ganze Zahl zwischen 2 und 20 und
c für eine ganze Zahl zwischen 1 und 5 steht, umfasst
und das Verhältnis von (a) zu (b) zwischen 1:1 bis 1:200 beträgt.

2. Verfahren nach Anspruch 1, **dadurch gekennzeichnet, dass** es sich bei der lufteintragenden Verbindung um mindestens eine aus der Reihe Polycarboxylatether, Ligninsulfonat, Melaminformaldhydsulfonat, Naphtalinformaldehydsulfonat, Mono-, Di-, Tri- und Polyglykole, Polyalkohole, Alkanolamin, Aminosäuren, Zucker, Molasse, organische und anorganische Salze handelt.

3. Verfahren nach Anspruch 2, **dadurch gekennzeichnet, dass** es sich bei dem Polycarboxylatether um ein Copolymers handelt, welches erhältlich ist durch Polymerisation einer Mischung von Monomeren, umfassend
(II) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst und
(III) mindestens ein ethylenisch ungesättigtes Monomer mit einem Polyalkylenoxid-Rest.

4. Verfahren nach Anspruch 3, **dadurch gekennzeichnet, dass** das ethylenisch ungesättigte Monomer (II) durch mindestens eine der folgenden allgemeinen Formeln aus der Gruppe (IIa), (IIb) und (IIc) repräsentiert wird 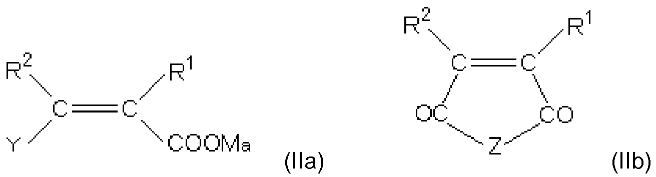 wobei
R¹ und R² unabhängig voneinander für Wasserstoff oder einen aliphatischen Kohlenwasserstoffrest mit 1 bis 20 C-Atomen
Y für H, -COOMₐ, -CO-O(C_{q}H_{2q}O)ᵣ-R³, -CO-NH-(C_{q}H_{2q}O)ᵣ-R³
M für Wasserstoff, ein ein- oder zweiwertiges Metallkation, Ammoniumion oder einen organischen Aminrest
a für ½ oder 1
R³ für Wasserstoff, einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen
q unabhängig voneinander für jede (C_{q}H_{2q}O)-Einheit gleich oder verschieden 2, 3 oder 4 und
r für 0 bis 200
Z für O, NR³
stehen, 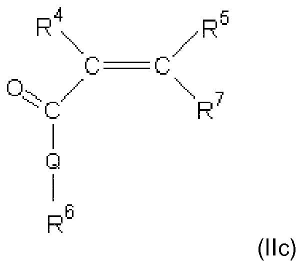 mit
R⁴ und R⁵ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen
Q gleich oder verschieden sowie repräsentiert durch NH, NR³ oder O; wobei R³ die oben genannte Bedeutung besitzt
R⁶ gleich oder verschieden sowie repräsentiert durch (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und (CₙH₂ₙ)-NR⁸_{b} mit n = 0, 1, 2, 3 oder 4 und b = 2 oder 3
R⁷ für H, -COOMₐ, -CO-O(C_{q}H_{2q}O)ᵣ-R³, -CO-NH-(C_{q}H_{2q}O)ᵣ-R³, wobei Mₐ, R³, q und r oben genannte Bedeutungen besitzen
R⁸ für Wasserstoff, einen aliphatischen Kohlenwasserstoffrest mit 1 bis 10 C-Atomen, einen cycloaliphatischen Kohlenwasserstoffrest mit 5 bis 8 C-Atomen, ein ggf. substituierter Arylrest mit 6 bis 14 C-Atomen.

5. Verfahren nach einem der Ansprüche 3 bis 4, **dadurch gekennzeichnet, dass** das ethylenisch ungesättigte Monomer (III) durch folgende allgemeine Formeln repräsentiert wird 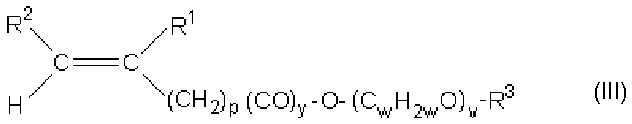 worin
p für eine ganze Zahl zwischen 0 und 6
y für 0 oder 1
v für eine ganze Zahl zwischen 3 und 500
w unabhängig voneinander für jede (C_{w}H_{2w}O)-Einheit gleich oder verschieden für eine ganze Zahl zwischen 2 und 18, wobei R¹, R² und R³ die oben genannte Bedeutung besitzen stehen.

6. Verfahren nach Anspruch 2, **dadurch gekennzeichnet, dass** es sich bei dem Alkanolamin um mindestens ein mono-, di- oder tertiäres Alkanolamin aus der Reihe Triethanolamin, Triisopropanolamin, Diethanolisopropanolamin, Ethanoldiisopropanolamin, Poly(hydroxyalkyliertes)polyethylenamin , N,N-Bis(2-hydroxypropyl)-N-(hydroxyethyl)amin, 1-(N,N-Bis(2-hydroxyethyl)amino)propan-2-ol, N,N,N',N'-Tetra-(2-hydroxyethyl)-ethylendiamin, Methyldiethanolamin, Monoethanolamin, Diethanolamin, Monoisoporopanolamin und Diisopropanolamin handelt.

7. Verfahren nach einem der Ansprüche 1 bis 6, **dadurch gekennzeichnet, dass** die Zusammensetzung enthaltend Zementklinker mindestens eine weitere Komponente aus der Reihe Flugasche, Hochofenschlacke, Metakaolin, Silicastaub, Kalksteinmehl, Puzzolane und Asche umfasst.

8. Verfahren nach einem der Ansprüche 1 bis 7, **dadurch gekennzeichnet, dass** die Zusammensetzung enthaltend Zementklinker zu mehr als 60 Gew.-% aus Portlandzementklinker besteht.

9. Verfahren nach einem der Ansprüche 1 bis 8, **dadurch gekennzeichnet, dass** der Mahlvorgang in mindestens einer Mühle aus der Reihe Kugelmühle, Gutbettwalzenmühle und Horizontalmühle durchgeführt wird.

10. Verfahren nach einem der Ansprüche 1 bis 9, **dadurch gekennzeichnet, dass** der Zusammensetzung enthaltend Zementklinker, vor oder während des Mahlvorgangs, Wasser zugegeben wird.

11. Verfahren nach einem der Ansprüche 1 bis 10, **dadurch gekennzeichnet, dass** die Zusammensetzung mindestens einen Emulgator enthält.

12. Hydraulisches Bindemittel, hergestellt nach einem der Ansprüche 1 bis 11.

13. Gehärtetes Baustofferzeugnis hergestellt aus einem hydraulischen Bindemittel nach Anspruch 12.

14. Additiv umfassend
(a) 0,1 bis 1 Gewichtsteile mindestens eines
Entschäumungsmittels der Formel
R¹⁰- (CₘH₂ₘ-O-)ₓ-(C_{d}H_{2d}-O-)_{c}-H (I)
wobei
R¹⁰ für einen verzweigten oder unverzweigten C₄- bis C₂₀-Alkylrest,
m für jede (CₘH₂ₘ-O-)-Einheit unabhängig voneinander gleich oder verschieden für 2 oder 3,
d für jede (C_{d}H_{2d}-O-)-Einheit unabhängig voneinander gleich oder verschieden für eine ganze Zahl zwischen 4 und 20,
x für eine ganze Zahl zwischen 2 und 20 und
c für eine ganze Zahl zwischen 1 und 5 steht
(b) 1 bis 20 Gewichtsteile mindestens einer Verbindung aus der Reihe Polycarboxylatether, Ligninsulfonat, Melaminformaldhydsulfonat, Naphtalinformaldehydsulfonat, Mono-, Di-, Tri- und Polyglykole, Polyalkohole, Aminoalkohole, Aminosäuren, Zucker, Molasse, organische und anorganische Salze und
(c) 0 bis 40 Gewichtsteile Wasser.

15. Verwendung eines Additives nach Anspruch 14 in einer Zusammensetzung enthaltend Zementklinker, wobei das Additiv vor, während oder nach dem Mahlvorgang zur Herstellung eines hydraulischen Bindemittels zugegeben wird, zur Verbesserung der Druckfestigkeit des daraus hergestellten, gehärteten Baustofferzeugnisses.
